# EUROPÄISCHE PATENTANMELDUNG

(11) **EP 4 851 737 A1**
(43) Veröffentlichungstag der Anmeldung: **09.12.2026**
(21) Anmeldenummer: 26163472.9
(22) Anmeldetag: 10.03.2026
(51) Int. Cl.: G05B 19/4061, G05B 19/4062

(54) **VERFAHREN ZUR KOLLISIONSERKENNUNG**

(30) Priorität: 05.06.2025 DE 102025001911
(71) Anmelder: Dr. Johannes Heidenhain GmbH, 83301 Traunreut (DE)
(72) Erfinder: HAMM, Eric, 83098 Brannenburg (DE); KOHLER, Frieder, 83362 Surberg (DE); POSCH, Martin, 83533 Edling (DE)

(57) **Zusammenfassung**

Es wird ein Verfahren zur Kollisionsüberwachung einer elektrisch angetriebenen Achse (L) einer numerisch gesteuerten Werkzeugmaschine (WZM) oder eines Roboters offenbart, mit folgenden Schritten:
a. Feststellen eines zurückgelegten Wegintervalls (dX1, dX2) der Ach-se (L).
b. Feststellen einer Änderung der Kraft (dF1, dF2) über das zurückgelegte Wegintervall (dX1, dX2).
c. Bestimmen einer ermittelten Steifigkeit (S1, S2) als Quotient der zuvor bestimmten Änderung der Kraft (dF1, dF2) pro Wegintervall (dX1, dX2).
d. Vergleichen der ermittelten Steifigkeit (S1, S2) mit einem vorgegebenen Grenzwert (Sg).
e. Erkennen einer Kollision, wenn die ermittelte Steifigkeit (S1, S2) den vorgegebenen Grenzwert (Sg) überschreitet, oder
f. Verzweigen zum Schritt a und Betrachten eines nächsten Wegintervalls (dX1, dX2), wenn keine Kollision erkannt wurde.

## Beschreibung

### GEBIET DER TECHNIK

Die Erfindung betrifft ein Verfahren zur Erkennung von Kollisionen in numerisch gesteuerten und elektrisch angetriebenen Werkzeugmaschinen oder Robotern. In modernen Numerischen Steuerungen sind zahlreiche Messwerte wie Achspositionen oder Antriebsströme verfügbar, die von der Steuerung zur Regelung der verschiedenen Achsen herangezogen werden. Diese Werte können außerdem für die Erkennung einer Kollision herangezogen werden, so dass durch eine schnelle Reaktion der Steuerung Schäden durch eine Kollision vermieden oder verringert werden können.

### STAND DER TECHNIK

Bei der Bearbeitung eines Werkstücks in einer Werkzeugmaschine oder mittels eines Roboters treten Prozesskräfte auf, etwa beim Eintritt eines Fräsers in ein Werkstück und beim Abtragen von Material auf einer Bahn des Fräsers. Betrachtet man diese Kräfte genauer, erkennt man auch den Eintritt der einzelnen Schneiden eines rotierenden Werkzeugs, so dass sich ein sehr unruhiger Verlauf der Kraft ergibt. Selbst bei Zustellbewegungen ohne Eingriff des Werkzeugs treten beim Beschleunigen einer Achse gewisse Kräfte auf. Die Prozesskräfte lassen sich über eigene Kraftsensoren messen, oder auch über die Antriebsströme eines Elektromotors berechnen, der ein Werkzeug antreibt. Durch Multiplikation der Motorkonstanten mit dem Antriebsstrom erhält man die Kraft. Da dieser lineare Zusammenhang zwischen dem Antriebsstrom und der ausgeübten Kraft immer gilt, und da im Falle einer Kollision letztlich die Kraft auf ein Element (z.B. ein Lager) der Werkzeugmaschine oder eines Roboters einen Schaden bewirkt, ist im Folgenden immer von der Kraft die Rede. Es ist dem Fachmann klar, dass in allen Betrachtungen stattdessen auch ein Strom betrachtet werden kann, der in einem linearen Zusammenhang zur jeweiligen Kraft steht. Statt eines Grenzwertes für eine Kraft kann also auch ein Grenzwert für einen Strom betrachtet werden.

Durch die jeweils betriebene Maschine sind maximale Kräfte vorgegeben, bei deren Überschreitung z.B. ein Schaden an einem Lager auftreten kann. Legt man für die Antriebskraft bzw. den Antriebsstrom einen Grenzwert fest und überwacht diesen, besteht das Problem, dass das betrachtete Signal wie oben beschrieben verschiedene Komponenten aufweist und damit verrauscht ist. Das Festlegen eines Grenzwerts führt dann entweder zu vielen Fehlauslösungen (wenn der Grenzwert zu niedrig gesetzt wurde), oder es werden Kollisionen zu spät erkannt (wenn der Grenzwert zu hoch gesetzt wurde), denn nach der Erkennung einer Kollision dauert es noch eine gewisse Zeit, bis eine als Reaktion ausgelöste Notbremsung Wirkung zeigt. Dieses Problem besteht auch, wenn man statt der Absolutwerte von Strom oder Kraft einen besonders schnellen Anstieg dieser Werte überwacht.

Aus der DE 3741973 A1 ist es daher bekannt, gewisse den Strom beeinflussende Größen bei der Kollisionsüberwachung zu berücksichtigen. So führt eine Beschleunigung einer Achse zu einem höheren Antriebsstrom, der für die Kollisionsüberwachung nicht relevant ist. Somit kann ein variabler Grenzwert für den Antriebsstrom festgelegt werden, mit dem die Beschleunigung einer Achse und andere prozessrelevante Parameter berücksichtigt werden. Nachteilig an so einer Lösung ist, dass unter Umständen eine während einer Beschleunigung auftretende Kollision nicht schnell genug erkannt wird, da der Anstieg im Strom zunächst der Beschleunigung zugeschrieben wird.

Aus der EP 1166960 A2 ist eine lastbasierte Kollisionsüberwachung bekannt, die das Problem der korrekten Wahl eines Grenzwertes für die Auslösung der Überwachung dadurch löst, dass der Grenzwert anhand von während einer vorhergehenden Bearbeitung aufgetretenen Kräften gesetzt wird, oder auch anhand eines Mittelwerts von mehreren Bearbeitungen. Hierfür muss aber mindestens eine Bearbeitung eines identischen Werkstücks durchgeführt werden, bei der diese Kollisionsüberwachung dann nicht greift. Für Werkstücke mit einer Losgröße 1 ist das Verfahren nicht anwendbar.

Aus der EP 3279748 B1 ist es bekannt, zur Überwachung eines Fräsprozesses aus dem Antriebsstrom die Zahneingriffsfrequenz zu filtern. Es wird eine Methode offenbart, diese Filterung möglichst einfach zu bewerkstelligen.

### ZUSAMMENFASSUNG DER ERFINDUNG

Es ist daher Aufgabe der Erfindung, ein Verfahren zur Kollisionserkennung anzugeben, das unabhängig von konkret vorgegebenen Grenzwerten für eine Kraft oder einen Strom Kollisionen so rechzeitig erkennen kann, dass Beschädigungen einer vom Motor angetriebenen Achse verringert oder ganz vermieden werden können. Eine Kollision sollte also erkannt werden, noch bevor Kräfte so groß werden, dass Beschädigungen der Lager auftreten. Das Verfahren soll auch mit verrauschten Signalen zuverlässig funktionieren.

Diese Aufgabe wird gelöst durch ein Verfahren gemäß Anspruch 1. Vorteilhafte Details dieses Verfahrens ergeben sich auch aus den von Anspruch 1 abhängigen Ansprüchen.

Es wird ein Verfahren zur Kollisionsüberwachung einer elektrisch angetriebenen Achse einer numerisch gesteuerten Werkzeugmaschine oder eines Roboters offenbart, mit folgenden Schritten:
a. Feststellen eines zurückgelegten Wegintervalls der Achse.
b. Feststellen einer Änderung der Kraft über das zurückgelegte Wegintervall.
c. Bestimmung einer ermittelten Steifigkeit als Quotient der zuvor bestimmten Änderung der Kraft pro Wegintervall.
d. Vergleich der ermittelten Steifigkeit mit einem vorgegebenen Grenzwert.
e. Erkennung einer Kollision, wenn die ermittelte Steifigkeit den vorgegebenen Grenzwert überschreitet, oder
f. Verzweigung zum Schritt a und Betrachtung eines nächsten Wegintervalls, wenn keine Kollision erkannt wurde.

Die Erfindung beruht also auf der Erkenntnis, dass die in einer Numerischen Steuerung vorliegenden Werte der Achsposition und des in den Antriebsmotor fließenden Stromes und damit (duch Multiplikation mit der Motorkonstanten) die durch den Motor ausgeübte Kraft jederzeit bekannt sind. Es wird eine Kraftänderung pro zurückgelegtem Weg einer Achse berechnet. Diesen Wert mit der Einheit Newton pro Meter (N/m) kann man mit der Steifigkeit der betrachteten Achse oder einem daraus abgeleiteten Grenzwert vergleichen und bei Überschreitung eine Kollision erkennen.

Diese Art der Kollisionsüberwachung ist unabhängig von der Zeit, da nur Wegdifferenzen und Kraftdifferenzen betrachtet werden. Wählt man die betrachteten Wegintervalle groß genug, wirkt eine Mittelung der Strom- bzw. Kraftwerte, so dass z.B. beim Fräsen der Eingriff einzelner Zähne eines Werkzeugs keine Rolle spielen.

Weitere Vorteile sowie Details der vorliegenden Erfindung ergeben sich aus der nachfolgenden Beschreibung verschiedener Ausführungsformen anhand der Figuren.

### KURZE BESCHREIBUNG DER ZEICHNUNGEN

Dabei zeigt
- Figur 1: Eine Bearbeitungssituation in einer Werkzeugmaschine mit einer drohenden Kollision,
- Figur 2: eine Kollisionsüberwachung gemäß dem Stand der Technik,
- Figur 3: eine Kollisionsüberwachung gemäß der Erfindung, bei der keine Kollision vorliegt,
- Figur 4: eine Kollisionsüberwachung gemäß der Erfindung, bei der eine Kollision erkannt wird,
- Figur 5: ein Flussdiagramm des Verfahrens zur Kollisionsüberwachung.

### BESCHREIBUNG DER AUSFÜHRUNGSFORMEN

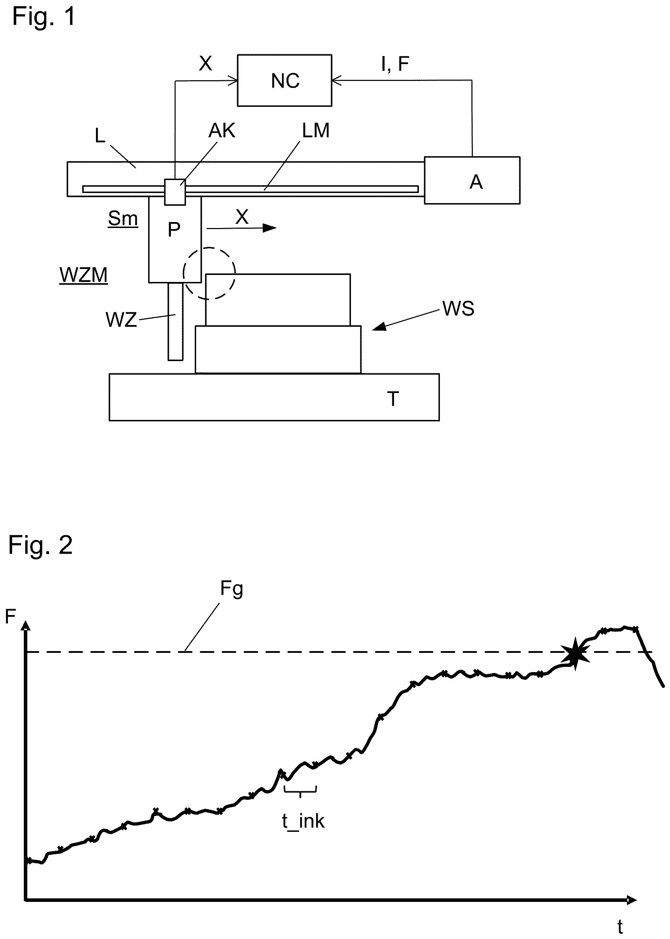

Die Figur 1 zeigt schematisch einen Ausschnitt einer Werkzeugmaschine WZM, die von einer Numerischen Steuerung NC gesteuert wird.

Auf einem Werkstücktisch T ist ein Werkstück WS angeordnet. Ein Werkzeug WZ, hier ein Fräser, soll das Werkstück WS bearbeiten. Der Fräser WZ ist hierzu an der Pinole P einer Werkzeugspindel montiert. Die rotierende Pinole P mit dem Fräser WZ kann mittels einer Linearachse L in X-Richtung verschoben werden, um den Fräser WZ mit dem Werkstück WS in Eingriff zu bringen und dieses zu bearbeiten. Um die Linearachse L zu bewegen kann ein Linearmotor oder ein rotierender Antrieb A zusammen mit einer Kugelumlaufspindel verwendet werden.

Die aktuelle Position in X-Richtung des Fräsers WZ und der Pinole P kann mittels eines Positionsmesssystems aus einem an der Linearachse L befestigten Linearmaßstab LM und einem mit der Pinole bewegten Abtastkopf AK festgestellt und an eine Numerische Steuerung NC übermittelt werden. Diese Numerische Steuerung NC arbeitet ein NC-Programm ab, in dem es einen Strom zum Antrieb A regelt, der die Linearachse L antreibt. Die Numerische Steuerung NC verfügt also jederzeit über die Positionswerte X der Linearachse L und den Motorstrom I zum Antrieb A, der wie erklärt gleichbedeutend mit der vom Antrieb A aufgebrachten Kraft F ist. Über eine Multiplikation mit der Motorkonstanten des Antriebs A ist der Motorstrom I in die vom Antrieb A ausgeübte Kraft F einfach umzurechnen. Die Steuerung NC kennt also auch die aktuellen Werte der Kraft F.

Wie man in der Figur 1 erkennen kann, droht bei einer Zustellung des Fräsers WZ in positiver X-Richtung eine Kollision der Pinole P mit dem Werkstück WS. Der Antrieb A wird dann zunächst versuchen, den programmierten Vorschub aufrecht zu erhalten und mit immer größerem Strom I und damit größerer Kraft F die Bewegung in X-Richtung zu bewerkstelligen. Dabei wird sich durch die endliche mechanische Steifigkeit Sm der Werkzeugmaschine WZM eine am Positionsmesssystem LM, AK feststellbare Bewegung ergeben, obwohl die Pinole P am Werkstück WS festgesetzt ist und sich nicht weiter bewegen lässt. Die Kraft F steigt dann aber sehr schnell an.

Die Mechanik der Werkzeugmaschine WZM und insbesondere die beteiligten Lager sind nur für eine begrenzte Kraft F ausgelegt. Im Falle zu großer Kräfte, wie sie bei einer Kollision auftreten, können die Lager beschädigt werden. Mit der hier vorgeschlagenen Kollisionsüberwachung sollen solche Beschädigungen vermieden werden.

Die Figur 2 zeigt eine herkömmliche Methode, um eine Kollisionsüberwachung in einer Werkzeugmaschine WZM durchzuführen. Wichtig ist es zu betonen, dass diese bekannte Methode auf einer Beobachtung der Kraft F über die Zeit t beruht.

Während einer Bearbeitung eines Werkstücks WS regelt die Steuerung NC in einem festen Takt oder Zeitinkrement t_ink den Strom I im Antrieb A, aus dem sich leicht die am Werkzeug WZ wirkende Kraft F ableiten lässt. Für einen Linearmotor ist lediglich eine Multiplikation mit der Motorkonstanten des Antriebs A erforderlich, für einen rotierenden Antrieb muss das so berechnete Drehmoment noch über die mechanischen Gegebenheiten der Kugelumlaufspindel in eine Kraft umgerechnet werden. In jedem Fall gilt, dass statt einem Grenzwert Fg für die wirkende Kraft auch ein Grenzwert für den kraft- bzw. momentbildenden Strom I überwacht werden kann.

So ein Grenzwert Fg kann aus der Mechanik der Werkzeugmaschine WZM bzw. aus den Herstellerangaben zum verwendeten Lager der Linearachse L abgeleitet werden. Das Verfahren zur Kollisionsüberwachung greift dann schon beim ersten Werkstück WS. Ein geeigneter Grenzwert Fg für die Kraft kann aber auch aus der Beobachtung vorhergehender Bearbeitungsvorgänge ohne Kollision ermittelt werden.

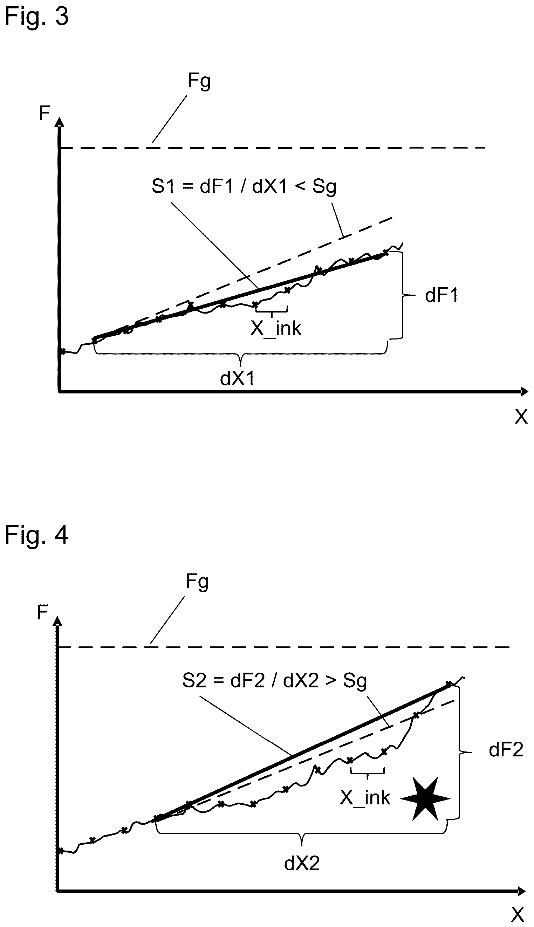

Die Figur 3 zeigt eine Kollisionsüberwachung gemäß der Erfindung. Dabei wird nun nicht mehr die Kraft F über der Zeit t betrachtet, sondern die Kraft F über die Position X der bewegten Linearachse L. Dabei wird wie folgt vorgegangen:
In einem bestimmten zeitlichen Takt t_ink werden wie im Stand der Technik zunächst Werte der aktuell wirkenden Kraft F und der aktuellen Position X erfasst. Wann immer eine gewisses Weginkrement X_ink zurückgelegt wurde, wird das Wertepaar aus Position X und Kraft F abgespeichert. Diese Werte sind in der Figur 3 mit Kreuzen markiert. Ein typischer Wert für so ein Weginkrement X_ink könnte zwischen 20µm und 200µm liegen und sollte parametrierbar sein, um das Verfahren zur Kollisionsüberwachung an verschiedene Gegebenheiten anpassen zu können.

Vorzugsweise wird für das weitere Vorgehen dann ein Intervall dX1 aus mehreren solcher Weginkremente X_ink betrachtet. Dadurch erhält man eine Mittelung über mehrere Messwerte, die Kollisionserkennung wird unempfindlicher gegenüber einzelnen Fehlmessungen oder zufälligen Einflüssen. Ein praktikabler Wert für die Mittelung wäre beispielsweise die Betrachtung von 10 Wertepaaren und damit eine Mittelung über 9 Weginkremente X_ink. Diese Filterlänge, also die Anzahl der Wertepaare oder der Weginkremente X_ink sollte in der Steuerung parametrierbar sein, um die Kollisionsüberwachung an die jeweiligen Gegebenheiten anpassen zu können. Es liegt im Rahmen der Erfindung, auch nur ein einziges Weginkrement X_ink zu betrachten, wenn der Effekt der Mittelung nicht benötigt wird oder eine besonders zeitnahe Erkennung einer Kollision erwünscht wird, und eine etwas häufigere Fehlauslösung im Gegenzug akzeptiert werden kann.

Für jedes Intervall dX1 wird die Kraftänderung dF1 ermittelt, als Differenz der Kraft F am letzten betrachten Punkt minus der Kraft F am ersten betrachteten Punkt. Dann wird der Quotient dF1/dX1 als ermittelte Steifigkeit S1 berechnet und mit einem Grenzwert Sg verglichen. Möglichkeiten zur Festlegung des Grenzwerts Sg werden weiter unten offenbart.

In der Figur 3 ist zunächst ein Fall dargestellt, in dem keine Kollision vorliegt und die Kollisionsüberwachung nicht auslöst, denn es gilt S1 = dF1/dX1 < Sg. Die ermittelte Steifigkeit S1 ist kleiner als der Grenzwert Sg. Anschaulich bedeutet das, dass die Steigung S1 im betrachteten Steigungsdreieck kleiner ist als der Grenzwert Sg, der ebenfalls der Steigung der mit Sg beschrifteten Linie entspricht. Dies ist in der Figur 3 gut zu erkennen. In diesem Fall wird die Bearbeitung des Werkstücks fortgesetzt.

Nach dem Zurücklegen eines weiteren Wegintervalls X_ink wird dann jeweils ein neues Wertepaar abgespeichert und erneut die Änderung der Kraft F für das nun um ein Weginkrement X_ink verschobene Steigungsdreieck betrachtet. Trotz einer Mittelung über neun Weginkremente X_ink wird also nach dem Zurücklegen jedes Weginkrements X_ink die ermittelte Steifigkeit S1 gegen den Grenzwert Sg verglichen.

In der Figur 4 ist nun ein Fall dargestellt, bei dem der Grenzwert Sg überschritten ist, also für die ermittelte Steifigkeit S2 = dF2 / dX2 > Sg gilt. Anschaulich bedeutet das, dass die Steigung S2 im betrachteten Steigungsdreieck nun größer ist als der Grenzwert Sg. Dies ist in der Figur 4 gut zu erkennen. In diesem Fall kann nun eine entsprechende Reaktion ausgelöst werden, also z.B. maximale Bremsung und evtl. anschließender Rückzug des Werkzeugs WZ auf der programmierten Bahn. In der Figur 4 ist gut zu erkennen, dass die Kollision schon vor Erreichen des Grenzwertes Fg erkannt wird und somit früher als im Stand der Technik (siehe Figur 2).

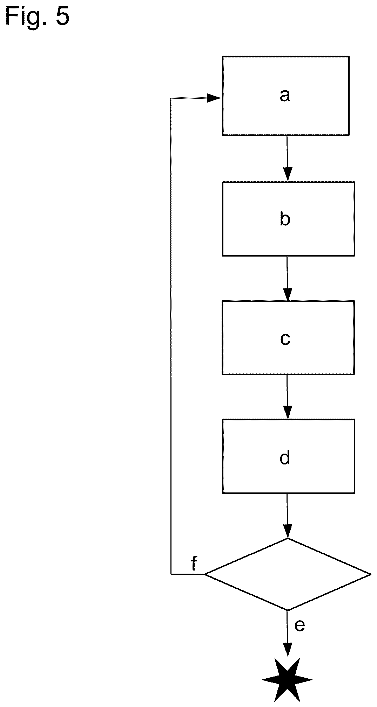

Die Figur 5 fasst die wichtigsten Schritte des Verfahrens zur Kollisionsüberwachung einer elektrisch angetriebenen Achse L einer numerisch gesteuerten Werkzeugmaschine (WZM) zusammen:
Im Schritt a, Feststellen eines zurückgelegten Wegintervalls dX1, dX2 der Achse L. Im Schritt b, Feststellen einer Änderung der Kraft dF1, dF2 über das zurückgelegte Wegintervall dX1, dX2. Im Schritt c, Bestimmen einer ermittelten Steifigkeit S1, S2 als Quotient der zuvor bestimmten Änderung der Kraft dF1, dF2 pro Wegintervall dX1, dX2. Im Schritt d, Vergleichen der ermittelten Steifigkeit S1, S2 mit einem vorgegebenen Grenzwert Sg. Im Schritt e, Erkennen einer Kollision, wenn die ermittelte Steifigkeit S1, S2 den vorgegebenen Grenzwert Sg überschreitet, oder im Schritt f, Verzweigen zum Schritt a und somit Betrachten eines nächsten Wegintervalls dX1, dX2, wenn keine Kollision erkannt wurde.

Nun sollen Möglichkeiten zum Festlegen des Grenzwerts Sg für die ermittelte Steifigkeit S1, S2 erörtert werden.

Die aus der Kraftänderung dF1, dF2 pro Weginkrement dX1, dX2 ermittelte Steifigkeit S1, S2 hat die Einheit N/m, also die Einheit einer Steifigkeit. Kennt man die mechanische Steifigkeit Sm der an einer möglichen Kollision beteiligten Achse **L,** könnte man also die ermittelte Steifigkeit S1, S2 mit dieser mechanische Steifigkeit Sm der Achse als Grenzwert Sg vergleichen. Liegt die ermittelte Steifigkeit S1, S2 auf oder über diesem Wert, so liegt eine Kollision nahe. Nur im Falle einer Kollision (wenn beispielsweise die Pinole P am Werkstück WS festgehalten wird) wird sich pro Wegänderung eine Kraftänderung ergeben, die der mechanischen Steifigkeit Sm der Achse entspricht. Im Falle einer Zustellbewegung oder auch einer Fräsbearbeitung ohne Kollision wird man eine niedrigere ermittelte Steifigkeit S1, S2 feststellen, da sich das Werkzeug WZ bewegen kann.

Die mechanische Steifigkeit Sm der Achse L lässt sich ermitteln, indem ein möglichst steifes Werkzeug WZ an der Pinole P befestigt wird, und langsam gegen ein festes Hindernis wie ein Spannmittel gefahren wird. Es wird also eine kontrollierte Kollision herbeigeführt, ohne Schaden anzurichten. Aus der dann noch möglichen Auslenkung der Achse L und der dafür notwendigen Kraft lässt sich die mechanische Steifigkeit Sm näherungsweise bestimmen. Auch aus den Konstruktionsdaten der Werkzeugmaschine WZM lässt sich durch eine mechanische Simulation ein Wert für die mechanische Steifigkeit Sm berechnen.

Es hat sich gezeigt, dass für den Grenzwert Sg die so ermittelte mechanische Steifigkeit Sm noch mit einem in der Numerischen Steuerung NC parametrierbaren Faktor zwischen 0 und 1 multipliziert werden sollte, vorzugsweise zwischen 0,2 und 0,8. In vielen Fällen hat sich ein Faktor von 0,5 bewährt. Während einer Bearbeitung eines Werkstücks WS ohne Kollision treten höhere Werte für die ermittelte Steifigkeit S1, S2 erfahrungsgemäß nicht auf. Auf diese Weise kann eine Kollision so rechtzeitig erkannt werden, dass durch eine maximale Bremsung der Achse Schäden am Lager vermieden werden können. Dieser Wert von der Hälfte der tatsächlichen Steifigkeit der Achse L lässt sich vorteilhaft in der Steuerung NC als Wert zwischen 0 und 1 parametrieren, um die Kollisionsüberwachung an die jeweiligen Gegebenheiten anpassen zu können.

Eine weitere Möglichkeit zur Festlegung des Grenzwerts Sg wäre auch, die ermittelte Steifigkeit S1, S2 während einem oder mehreren Bearbeitungsvorgängen ohne Kollision zu beobachten, und einen Grenzwert Sg dann mit einem gewissen Abstand (etwa ein Aufschlag von 20%) etwas oberhalb festzusetzen.

Wie beschrieben wird für die Kollisionsüberwachung der Strom des Antriebs A gemessen, um einen der Kraft F proportionalen Wert zu erhalten. Es hat sich bewährt, diesen gemessenen Strom I um den für einen Luftschnitt nötigen Strom zu bereinigen. Auf diese Weise wird der für eine gewollte Beschleunigung des Werkzeugs WZ notwendige Strom bzw. die dafür notwendige Kraft nicht bei der Kollisionsüberwachung berücksichtigt. Aus dem gleichen Grund kann es auch ratsam sein, die Zahneingriffsfrequenz des Werkzeugs WZ aus dem Signal des Stroms I herauszufiltern. Ein Verfahren hierfür ist im eingangs zitierten Stand der Technik offenbart.

Das hier beschriebene Verfahren zur Kollisionsüberwachung funktioniert ab einer gewissen Mindestgeschwindigkeit der Achse L gut und erkennt Kollisionen früher als eine herkömmliche Überwachung eines Grenzwerts für die Kraft. Es sollte jedoch ein parametrierbarer Grenzwert für die Geschwindigkeit festgelegt werden, unterhalb der diese Kollisionsüberwachung nicht mehr angewendet wird. **In** Tests und in Simulationen hat sich eine Mindestgeschwindigkeit von ca. 0,1m/s bewährt, oberhalb der das Verfahren zur Kollisionsüberwachung bessere Ergebnisse liefert als herkömmliche Verfahren.

Es hat sich außerdem bewährt, die erfindungsgemäße Kollisionsüberwachung gemäß der Figuren 3 und 4 zusätzlich zur herkömmlichen Überwachung einer Kraftgrenze Fg wie in Figur 2 durchzuführen. Da beide Methoden unterschiedliche Vor- und Nachteile aufweisen, lässt sich so die Chance auf eine rechtzeitige Erkennung einer Kollision erhöhen. Dies gilt vor allem, wenn wegen einer zu niedrigen Geschwindigkeit der Achse L das erfindungsgemäße Verfahren nicht durchgeführt wird. In diesem Fall kann auch beim Überschreiten der Kraftschwelle Fg noch rechtzeitig abgebremst werden.

Da an einer Werkzeugmaschine WZM ein Werkzeug WZ oft auf einer Bahn bewegt wird, die Bewegungsanteile mehrerer Achsen L aufweist, kann die hier vorgestellte Kollisionsüberwachung für jede Achse L separat durchgeführt werden, oder aber in der Bewegungsrichtung des Werkzeugs WZ. Hierfür werden alle vektoriellen Größen wie Kräfte und Bewegungen zunächst überlagert. Die weiteren Schritte erfolgen dann wie oben für eine Achse beschrieben. Das Weginkrement X_ink hat dann also Anteile mehrerer Achsen L, und auch die mechanische Steifigkeit Sm und damit der Grenzwert Sg setzt sich aus den Steifigkeiten der beteiligten Achsen zusammen.

Abschließend soll noch einmal betont werden, dass zwar der Strom I zum Antrieb gemessen, daraus aber eine Kraft F berechnet und weiter betrachtet wird. Strom und Kraft sind einander über die Motorkonstante direkt proportional. Für eine konkrete Werkzeugmaschine könnte man das Verfahren auch anhand einer ungewöhnlich definierten Steifigkeit mit der Einheit Ampere pro Meter ausführen, die Motorkonstante würde sich dann im passend definierten Grenzwert Sg oder Fg finden. In diesem Sinne sollen die hier verwendeten-Größen Kraft F und Grenzwert Fg sowie ermittelte Steifigkeit S1, S2 und Grenzwert Sg auch diese Abwandlung umfassen.

Außerdem soll jede Abfrage, ob ein Wert größer (oder kleiner) als der zugehörige Grenzwert ist, auch die Abfrage auf Gleichheit umfassen. Ob dieser Grenzfall als Kollision betrachtet wird oder nicht, spielt technisch keine Rolle.

## Patentansprüche

1. Verfahren zur Kollisionsüberwachung einer elektrisch angetriebenen Achse (L) einer numerisch gesteuerten Werkzeugmaschine (WZM) oder eines Roboters, mit folgenden Schritten:
a. Feststellen eines zurückgelegten Wegintervalls (dX1, dX2) der Achse (L),
b. Feststellen einer Änderung der Kraft (dF1, dF2) über das zurückgelegte Wegintervall (dX1, dX2),
c. Bestimmen einer ermittelten Steifigkeit (S1, S2) als Quotient der zuvor bestimmten Änderung der Kraft (dF1, dF2) pro Wegintervall (dX1, dX2),
d. Vergleichen der ermittelten Steifigkeit (S1, S2) mit einem vorgegebenen Grenzwert (Sg), und
e. Erkennen einer Kollision, wenn die ermittelte Steifigkeit (S1, S2) den vorgegebenen Grenzwert (Sg) überschreitet, oder
f. Verzweigen zum Schritt a und Betrachten eines nächsten Wegintervalls (dX1, dX2), wenn keine Kollision erkannt wurde.

2. Verfahren nach Anspruch 1, wobei das zurückgelegte Wegintervall (dX1, dX2) in eine Mehrzahl von Weginkrementen (X_ink) unterteilt ist, für deren Anfang und Ende jeweils die Werte der Kraft F ermittelt werden.

3. Verfahren nach Anspruch 2, wobei das nächste Wegintervall (dX1, dX2) gegenüber dem zuvor betrachteten Wegintervall (dX1, dX2) um ein Weginkrement (X_ink) verschoben ist.

4. Verfahren nach Anspruch 3, wobei die Mehrzahl der Weginkremente (X_ink) pro Wegintervall (dX1, dX2) während einer Initialisierung der Kollisionsüberwachung konfiguriert wird.

5. Verfahren nach einem der vorhergehenden Ansprüche, wobei der Grenzwert (Sg) bestimmt wird als eine mechanische Steifigkeit (Sm) der Achse (L) multipliziert mit einem Faktor zwischen 0 und 1, bevorzugt zwischen 0.2 und 0.8.

6. Verfahren nach einem der vorhergehenden Ansprüche, wobei das Verfahren zur Kollisionsüberwachung nur ausgeführt wird, wenn eine Geschwindigkeit der Achse (L) einen während der Initialisierung der Kollisionsüberwachung festgelegten Grenzwert überschreitet.

7. Verfahren nach einem der vorhergehenden Ansprüche, wobei ein im Antrieb (A) festgestellter Strom (I) korrigiert wird um eine Komponente des Stroms, die zum Beschleunigen der Achse (L) während eines Luftschnitts benötigt wird, und/oder um Stromspitzen, die durch eine Zahneingriffsfrequenz eines Werkzeugs (WZ) im Strom (I) auftreten.

8. Verfahren nach einem der vorhergehenden Ansprüche, wobei die festgestellte Kraft (F) zusätzlich auf einen Grenzwert (Fg) überwacht wird, bei dessen Überschreitung eine Kollision erkannt wird.

9. Numerische Steuerung für die Werkzeugmaschine (WZM) oder den Roboter, wobei die Numerische Steuerung (NC) programmiert ist für eine Kollisionsüberwachung nach einem der vorhergehenden Ansprüche.
